# EUROPÄISCHE PATENTSCHRIFT

(11) **EP 3 852 246 B1**
(45) Veröffentlichungstag und Bekanntmachung des Hinweises auf die Patenterteilung: **24.04.2024**
(21) Anmeldenummer: 20000479.4
(22) Anmeldetag: 21.12.2020
(51) Int. Cl.: H02K 3/52, H02K 15/085, H01R 4/48, H01R 4/02

(54) **KONTAKTEINRICHTUNG EINES STATORS, STATOR UND ELEKTRISCHE MASCHINE**
CONTACT DEVICE OF STATOR, STATOR AND ELECTRIC MACHINE
DISPOSITIF DE CONTACT D'UN STATOR, STATOR ET MACHINE ÉLECTRIQUE

(30) Priorität: 16.01.2020 DE 102020000232
(43) Veröffentlichungstag der Anmeldung: 21.07.2021
(73) Patentinhaber: Wieland-Werke AG, 89079 Ulm (DE)
(72) Erfinder: Wieprecht, Nico, 88316 Isny (DE)

(56) Entgegenhaltungen:
- CN-U- 208 806 679
- DE-A1-102016 224 526
- DE-U1-202010 017 081

## Beschreibung

Die Erfindung betrifft eine Kontakteinrichtung für einen Stator einer elektrischen Maschine gemäß dem Oberbegriff des Anspruchs 1 sowie einen Stator und eine elektrische Maschine.

Elektromotoren weisen beispielsweise als dreiphasige Drehstrommaschinen einen Stator mit drei Phasen und damit zumindest drei Phasenleiter oder Phasenwicklungen auf, die jeweils phasenversetzt mit elektrischem Strom beaufschlagt werden, um ein magnetisches Drehfeld zu erzeugen, in dem ein üblicherweise mit Permanentmagneten versehener Rotor oder Läufer rotiert. Die Phasenenden der Phasenwicklungen werden zur Ansteuerung des Elektromotors über Phasenanschlüsse an eine Motorelektronik geführt. Die Spulen werden über die Spulenenden der Phasenwicklungen in geeigneter Weise miteinander verschaltet. Die Art der Verschaltung der Spulenenden ist durch das Wicklungsschema der Drehfeldwicklung bestimmt.

Zur Führung und Verschaltung der Spulenenden sind Kontakteinrichtungen üblich, die stirnseitig auf den Stator aufgesetzt werden. Eine derartige Kontakteinrichtung weist beispielsweise einen Verlegering und einen darauf aufsetzbaren Verschaltungsring auf, zwischen denen die zu verschaltenden Spulenenden liegen.

Um in der Praxis unterschiedliche Wicklungsschemata geeignet und flexibel anzuschließen, ist es beispielsweise angedacht, die Kontakteinrichtung als eine modulare Baugruppe auszuführen, sodass je nach Anwendung und gewünschter Verschaltung eine unterschiedliche Kontaktiereinrichtung auf den Stator aufgesetzt wird. Insbesondere bei Anwendungen, in welchen eine einfach oder mehrfach redundante Verschaltung der Drehfeldwicklung gewünscht ist, weist eine derartige modulare Kontaktiereinrichtung einen hohen Bauraumbedarf auf.

Aus der Druckschrift EP 2 606 558 A1 ist eine Kontakteinrichtung in einem Stator einer elektrischen Maschine bekannt, welcher einen ringförmigen Kontaktträger aus elektrisch isolierendem Material sowie elektrische Leitungsbahnen zur Kontaktierung der Spulen des Stators aufweist. Die Leitungsbahnen sind über umgeformte Befestigungselemente am Kontaktträger gehalten.

Die Druckschrift DE 20 2010 017 081 U1 offenbart eine Kontakteinrichtung für einen Stator einer elektrischen Maschine. An der radialen Außenkante eines Kontaktträgers sind nach außen offene Aufnahmenuten für die Enden von Spulendrähten angeordnet. Die Aufnahmenuten erstrecken sich in Achsrichtung. Sie dienen dazu, die Enden der Spulendrähte so zu positionieren, dass diese in Kontakt mit Kontaktabschnitten von Leitungsbahnen kommen. Zu diesem Zweck sind die Aufnahmenuten als einfache Aussparungen im Material des Kontaktträgers ausgebildet.

Des Weiteren ist aus der Druckschrift DE 10 2016 224 526 A1 ein Stator einer elektrischen Maschine mit einem Statorblechpaket bekannt. Eine zugehörige Kontakteinrichtung umfasst ein stirnseitig auf das Statorblechpaket aufgesetztes Verlegeelement sowie ein Verschaltungselement für die Verschaltung der Spulenenden mit Phasenanschlüssen an einer Statorstirnseite. Die Spulenenden ragen senkrecht durch Durchführöffnungen des Verlegeelements hindurch und sind jeweils radial abgewinkelt entlang einer Führungsnut des Verlegeelements geführt. An einer Kontaktstelle der Führungsnut sind diese Spulenenden mittels eines mit dem Verschaltungselement elektrisch leitfähig gekoppelten Kontaktelements axial kontaktiert und fixiert. Die Führungsnuten weisen in Axialrichtung jeweils eine Engstelle auf, welche das jeweils in der Führungsnut geführte Spulenende gegen ein axiales Herausgleiten sichert.

Die Druckschrift CN 208 806 679 U offenbart einen elektrischen Motor mit einer speziellen Einrichtung, die vor Korrosion schützt. Zu diesem Zweck werden bestimmte Teile des Motors (vordere Endabdeckung, Statorkern und hintere Endabdeckung) durch einen Leiter verbunden, so dass diese Teile auf dem gleichen elektrischen Potenzial liegen. Um die Zuverlässigkeit dieses Korrosionsschutzes zu verbessern, weist der elektrische Motor einen Befestigungsring mit einer selbst-sichernden Struktur auf. Diese selbst-sichernde Struktur umfasst Fixiereinrichtungen, die so ausgebildet sind, dass sie das Ende des Leiters gegen ein Verschieben in Richtung der Leiterachse verhindern, den Leiter also axial fixieren.

Der Erfindung liegt die Aufgabe zugrunde, eine Kontakteinrichtung für einen Stator einer elektrischen Maschine weiterzubilden.

Die Erfindung wird bezüglich einer Kontakteinrichtung durch die Merkmale des Anspruchs 1, bezüglich eines Stators durch Anspruch 9 und bezüglich einer elektrischen Maschine durch Anspruch 10 wiedergegeben. Die weiteren rückbezogenen Ansprüche betreffen vorteilhafte Aus- und Weiterbildungen der Erfindung.

Die Erfindung schließt eine Kontakteinrichtung für einen Stator einer elektrischen Maschine ein, wobei die Kontakteinrichtung einen Kontaktträger aus elektrisch isolierendem Material, eine Oberseite, die vom Stator abgewandt positionierbar ist, sowie zumindest auf der vom Stator abgewandten Oberseite elektrisch leitende Anschlussleiter zur Kontaktierung einer Mehrzahl von über dem Umfang des Stators angeordneten Spulen über Spulenleiter aufweist. Ferner weist die Kontakteinrichtung Durchführöffnungen auf, durch die die Spulenleiter der Spulen so durchführbar sind, dass mindestens ein Spulenleiter mit einem Anschlussleiter verbindbar ist. Insbesondere kann jeweils ein Spulenleiter mit jeweils einem Anschlussleiter verbindbar sein. Zudem weist der Kontaktträger an und/oder in den Durchführöffnungen Fixiereinrichtungen in Form von elastischen Haltenasen auf, die derart ausgebildet sind, dass mindestens ein durch eine Durchführöffnung durchgeführter Spulenleiter einen Anschlussleiter an einer Kontaktfläche berührt und der Spulenleiter an dieser Kontaktfläche durch senkrecht zur jeweiligen Leiterachse wirkende Kräfte eine permanente Kraftwirkung auf den Anschlussleiter ausübt. Dadurch ist es möglich, dass zueinander parallel liegende Abschnitte des Spulenleiters und des Anschlussleiters, insbesondere jeweils zueinander parallel liegende Enden der Spulenleiter und der Anschlussleiter, an der gemeinsamen Kontaktfläche aneinander gepresst werden.

Die erfindungsgemäße Kontakteinrichtung kann bevorzugt in einem Stator einer elektrischen Maschine wie einem Generator oder einem Elektromotor eingesetzt werden. Anwendungsgebiete sind beispielsweise Motoren im Automotivbereich oder in Anwendungen im allgemeinen Maschinenbau und der Antriebstechnik. Beispielsweise bei Servomotoren, Antriebsmotoren oder Hilfsaggregate in Fahrzeugen.

Die Erfindung geht dabei von der Überlegung aus, dass der aus einem isolierenden Material hergestellte Kontaktträger auf die Stirnseite des Stators aufgesetzt und mit dem Statorgehäuse verbunden werden kann. Der Kontaktträger dient somit zum einen zur Befestigung der Kontakteinrichtung am Stator und zum anderen als Träger der Leitungsbahnen der Anschlussleiter. Aufgrund der Ausführungsweise des Kontaktträgers sind aus elektrisch isolierendem Material verschiedene Leitungsbahnen auf dem Kontaktträger elektrisch voneinander isoliert. Obwohl die Kontaktträger oft bereits sehr komplex aufgebaut sind, genügt prinzipiell auch ein einziger ringförmiger Kontaktträger, an dem die Leitungsbahnen der Anschlussleiter angeordnet sind.

Über die Kontakteinrichtung können die Spulen im Stator über Spulenleitungen elektrisch angebunden werden. Die Kontakteinrichtung umfasst einen meist ringförmigen Kontaktträger aus elektrisch isolierendem Material sowie elektrisch leitende Leitungsbahnen als Anschlussleiter zur Kontaktierung des Wicklungsdrahtes der Spulen. Die Leitungsbahnen, Wicklungsdrähte der Spulen und die Spulenleiter können einen runden, ovalen, rechteckigen oder auch quadratischen Querschnitt senkrecht zu ihrer Leiterachse aufweisen.

Um die Spulenleiter der Spulen mit den Anschlussleitern zur elektrischen Kontaktierung zu verbinden ist es von Vorteil, dass diese an der Verbindungsstelle einen gleichgearteten rechteckigen oder auch quadratischen Querschnitt aufweisen. Dadurch berühren sich die Spulenleiter und die Anschlussleiter an einer flächig ausgebildeten und maximierten Kontaktfläche.

Im Bereich dieser Kontaktfläche sind die Spulenleiter mit den Anschlussleitern elektrisch leitend und bevorzugt stoffschlüssig verbunden. Geeignete stoffschlüssige Verbindungen der an jeweiligen Enden aneinander liegenden Spulenleiter und Anschlussleiter sind beispielsweise Schweißverbindungen oder Lötverbindungen.

Der Kontaktträger aus elektrisch isolierendem Material, der bevorzugt ringförmig ausgeführt ist, dient zunächst als Positionierelement beim Verlegen und Verbinden der Leiterenden. Hierzu werden die Spulenleiter durch die Durchführöffnungen geschoben. Die Durchführöffnungen weisen Fixiereinrichtungen auf, welche die Anschlussleiter zumindest durch Reibschluss und/oder Stoffschluss festhalten. Mit anderen Worten: Die Fixiereinrichtungen sind elastisch verformbare enge Durchtrittsstellen, welche in den Durchführöffnungen angeordnet sind. Das elastische Verhalten der Engstelle bewirkt das Festhalten, wenn ein Spulenleiter mit einem Anschlussleiter der Kontakteinrichtung beispielsweise durch eine Steckverbindung oder stoffschlüssig durch eine Schweiß- oder Lötverbindung kontaktiert wird. Bei Schweiß- oder Lötverbindungen bewirkt das Festhalten der Spulenleiter bereits ein Fixieren der Kabelenden vor dem Schweißen oder Löten, wodurch die jeweiligen Spulenleiter zum jeweiligen Anschlussleiter zur Herstellung einer Fügeverbindung präzise zueinander positioniert sind.

Die Spulenleiter üben an der Kontaktfläche eine permanente Kraftwirkung auf die Anschlussleiter aus und können sichere elektrische Verbindungen gegebenenfalls bereits ohne weitere Haltemittel herstellen. Zur Erzeugung der Kraftwirkung sind die Kontaktträger an den Durchführöffnungen mit Fixiereinrichtungen ausgestattet, die eine gezielte Positionierung beider Leiterenden zueinander ermöglicht. Hierdurch werden die zueinander parallel liegenden Leiterabschnitte, insbesondere Leiterenden, durch senkrecht zur jeweiligen Leiterachse wirkenden Kräfte an der gemeinsamen Kontaktfläche aneinandergepresst. Diese Kraftwirkung ist insbesondere beim Fügevorgang zur Herstellung einer guten elektrischen Kontaktierung vorhanden und vorteilhafterweise auch nach dem Verbinden der Leiterenden noch weiterhin dauerhaft ausgebildet.

Ein besonderer Vorteil besteht darin, dass bereits alleine durch das Aneinanderpressen von Spulenleiter und Anschlussleiter ein zuverlässiger und dauerhafter elektrischer Kontakt vorhanden ist, der nicht auf Zugspannungen belastet wird.

In bevorzugter Ausgestaltung der Erfindung kann der Kontaktträger an den Durchführöffnungen mit Fixiereinrichtungen derart ausgebildet sein, dass diese die Spulenleiter zumindest in einer Richtung gegenüber einer axialen Bewegung arretieren. Zur Montage werden die Spulenleiter der Spulen durch die Durchführöffnungen geschoben. Die Fixiereinrichtungen sind bevorzugt so ausgeführt, dass die Spulenleiter zumindest entgegen der Einschubrichtung durch Reibschluss oder Stoffschluss festgehalten werden. Die Einschubrichtung ist die Richtung ausgehend von der den Spulen zugewandten Unterseite des Kontaktträgers hin zur Oberseite, auf der sich die Anschlussleiter befinden. Hierbei sind als Fixiereinrichtung elastisch verformbare enge Durchtrittsstellen geschaffen, die einem Zurückbewegen des jeweiligen Leiterendes zuverlässig entgegenwirken. Das elastische Verhalten der Engstelle bewirkt das Fixieren, bereits bevor ein Spulenleiter mit einem Anschlussleiter der Kontakteinrichtung, beispielsweise durch eine Steckverbindung oder stoffschlüssig durch eine Schweiß- oder Lötverbindung, verbunden wird.

Die Fixiereinrichtung ist durch elastische Haltenasen ausgebildet. Mehrere elastische verformbare Haltenasen bilden so eine Engstelle, deren Öffnungsweite kleiner als der Durchmesser der Spulenleiter ist. Diese verengen den Querschnitt derart, dass die Fixiereinrichtung wie ein Greifmechanismus die jeweiligen Leiterenden fixiert. Durch elastisches verformbares Material wird erst bei Durchtritt eines Leiterendes die Öffnungsweite aufgeweitet und dadurch eine senkrecht zur axialen Richtung des Leiters und/oder gleichzeitig auch axial eine Haltekraft erzeugt. Als Materialien eignen sich Kunststoffe mit entsprechend elastischen Eigenschaften. Insbesondere können die Haltenasen auch aus demselben Material wie das des Kontaktträgers bestehen.

Prinzipiell ist es auch vorteilhaft, dass in mindestens einer Durchführöffnung mehrere Haltenasen angeordnet sein können. Die Haltenasen können dabei in einer Durchtrittsebene angeordnet sein und/oder auch in axialer Richtung der Durchtrittsöffnung durch den Kontaktträger gestaffelt und/oder versetzt angeordnet sein. In ihrer Gesamtwirkung sind die Haltenasen so angeordnet, dass diese im Ergebnis eine permanente Kraftwirkung der Spulenleiter an der gemeinsamen Kontaktfläche auf die Anschlussleiter ausüben. In ihrer Gesamtheit können die Haltenasen auch ein Zurückbewegen des jeweiligen Leiterendes entgegen der Einschubrichtung verhindern. Bei quadratischem oder rechteckigem Leiterquerschnitt ist es vorteilhaft, mit vier Haltenasen auf die vier Leiteroberflächen anzusetzen.

Üblicherweise wird zwischen der Fixiereinrichtung und dem durch die Durchführöffnung tretenden Leiterabschnitt ein durch Haftreibung verursachter Kraftschluss ausgebildet. Aber auch anderweitige Fixiermechanismen alleine oder untereinander in Kombination sind angedacht.

So können bei einer vorteilhaften Ausführungsform der Erfindung die Haltenasen eine formschlüssige Verbindung mit dem Spulenleiter ausbilden. Hierzu kann der durch die Durchführöffnung tretende Leiterabschnitt an dessen Oberfläche eine geeignete Rauheit oder eine anderweitige Struktur aufweisen, welche jeweils mit den Haltenasen einen Formschluss ausbildet. Strukturell vorteilhaft sind Kerbungen, Einbuchtungen oder Zahnungen an der Leiteroberfläche eines Spulenleiters, in welche die Haltenasen eingreifen können.

Alternativ oder in Kombination können bei einer weiteren vorteilhaften Ausführungsform der Erfindung die Haltenasen eine stoffschlüssige Verbindung mit dem Spulenleiter ausbilden. Hierzu können thermische Verbindungsverfahren, wie beispielsweise Schweißen oder Löten, benutzt werden. Durch einen gezielten Wärmeeintrag bei der Herstellung der elektrischen Kontaktierung kann entlang der Spulenleiter so viel Wärme zur Fixiereinrichtung abfließen, dass diese thermisch an oder aufgeschmolzen wird und so einen stabilen Stoffschluss ausbildet.

In weiterer vorteilhafter Ausgestaltung der Erfindung kann die Fixiereinrichtung in Einschubrichtung der Spulenleiter am ausgangsseitigen Ende der Durchführöffnung angeordnet sein. Hierbei wird beim Einbringen das Leiterende zuerst in die Durchtrittsöffnung eingeführt und ist bereits am ausgangsseitigen Ende so stabil geführt, dass es durch die Fixiereinrichtung hindurchtreten kann.

Vorteilhafterweise können sich die Durchführöffnungen in Einschubrichtung der Spulenleiter konisch verjüngen. Eine konische Form der Durchtrittsöffnung bedingt eingangsseitig eine größere Öffnung, in die ein Leiterende eines Spulenleiters leicht eingeschoben werden kann, wobei das Leiterende beim Einbringen durch den sich verjüngenden konischen Verlauf zum ausgangsseitigen Ende geführt wird. Bei derartigen Durchführöffnungen ist es von Vorteil, die Fixiereinrichtung direkt am ausgangsseitigen Ende anzuordnen. Auf diese Weise wird das Leiterende direkt in die Fixiereinrichtung eingeführt.

Ein weiterer Aspekt der Erfindung schließt einen Stator einer elektrischen Maschine mit einer erfindungsgemäßen Kontakteinrichtung ein.

Ein weiterer Aspekt der Erfindung schließt eine elektrische Maschine mit einem erfindungsgemäßen Stator ein. Der vorstehend genannte Stator mit der erfindungsgemäßen Kontakteinheit kann eine eigenständige Moduleinheit einer elektrischen Maschine sein.

Ausführungsbeispiele der Erfindung werden anhand der schematischen Zeichnungen näher erläutert.

Darin zeigen:
- Fig. 1: schematisch einen Stator einer elektrischen Maschine mit einer stirnseitig aufgesetzten Kontakteinrichtung,
- Fig. 2: schematisch eine Detailansicht einer Kontakteinrichtung im Bereich einer Kontaktstelle eines Spulenleiters mit einem Anschlussleiter,
- Fig. 3: eine Aufsicht auf einen Teilabschnitt einer Kontakteinrichtung,
- Fig. 4: einen Querschnitt entlang der Linie A-A aus Figur 3,
- Fig. 5: einen Querschnitt auf einen Teilabschnitt einer Kontakteinrichtung, und
- Fig. 6: eine Detailansicht der Fixiereinrichtung aus Figur 5.

Einander entsprechende Teile sind in allen Figuren mit denselben Bezugszeichen versehen.

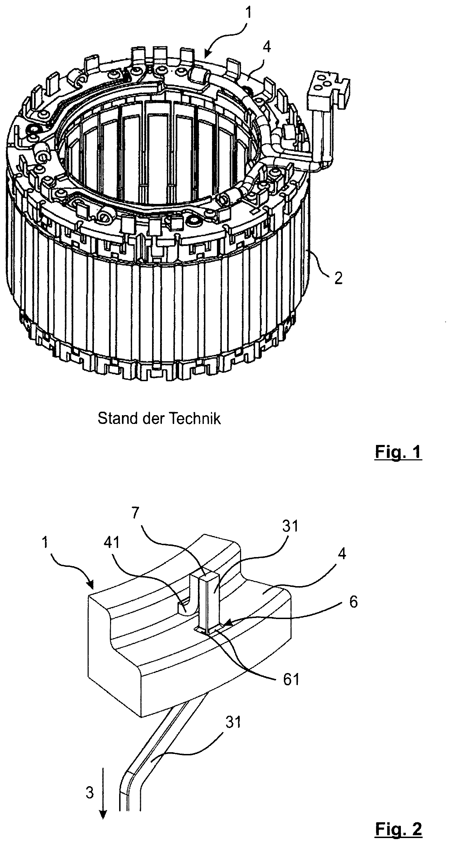

In Fig. 1 ist schematisch ein Stator 2 mit stirnseitig aufgesetzter Kontakteinrichtung 1 dargestellt. Die auf der Oberseite eines Kontaktträgers 4 angeordneten Anschlusskontakte sind in einem Stecker zusammengefasst, der mit dem elektrischen Anschluss zu verbinden ist. Diese Kontakteinrichtung 1 ist in Fig. 2 als Teilausschnitt dargestellt.

Fig. 2 zeigt schematisch eine Detailansicht einer Kontakteinrichtung 1 im Bereich einer Kontaktstelle eines Spulenleiters 31 mit einem Anschlussleiter 41. Die Spule 3 ist in der Figur 2 nicht näher dargestellt, jedoch in Pfeilrichtung angeordnet. Der Spulenleiter 31 und der Anschlussleiter 41 weisen einen rechteckigen Querschnitt senkrecht zu ihrer jeweiligen Leiterachse auf. Durch die rechteckigen Querschnitte berühren sich die Spulenleiter 31 und die Anschlussleiter 41 an einer gemeinsamen Kontaktfläche 7. Das Ende des Spulenleiters 31 tritt durch eine Durchführöffnung im Kontaktträger 4 hindurch.

Am ausgangsseitigen Ende der Durchführöffnung ist eine Fixiereinrichtung 6 mit Haltenasen 61 ausgebildet. In diesem Fall handelt es sich um vier elastisch verformbare Haltenasen 61, die jeweils an einer Fläche des rechteckigen Spulenleiters 31 anliegen. Diese Haltenasen 61 verengen den Querschnitt derart, dass die Fixiereinrichtung 6 wie ein Greifmechanismus auf die jeweiligen Spulenleiter 31 wirkt. In diesem Fall bestehen die Haltenasen 61 auch aus demselben Material wie das des Kontaktträgers 4.

Bei der Montage der Spulenleiter 31 werden diese durch die Fixiereinrichtung 6 vorgegebene Engstelle hindurchgeschoben und dabei die Haltenasen 61 quasi vorgespannt. Hierdurch entsteht eine Kraftwirkung, durch welche die Spulenleiter 31 auf die Anschlussleiter 41 an der gemeinsamen Kontaktfläche 7 eine permanente Kraftwirkung ausüben. Die Spulenleiter 31 und die Anschlussleiter 41 sind bereits durch die Anpresskraft bereits elektrisch leitend verbunden und zudem zumindest an Teilabschnitten oder über die gesamte gemeinsame Kontaktfläche 7, beispielsweise über Lot- oder Schweißverbindungen, stoffschlüssig gefügt. Auch bei Steckkontakten kann die Anpresskraft zwischen dem Spulenleiter 31 und dem Anschlussleiter 41 dazu dienen einen zuverlässigen elektrischen Kontakt zu erzeugen.

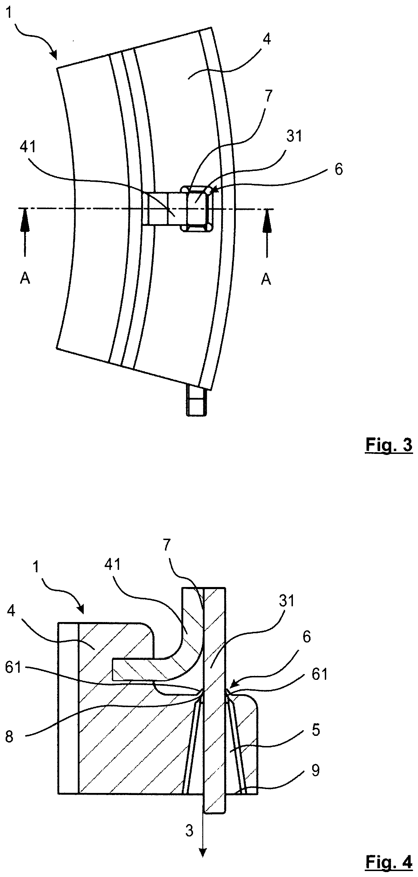

Fig. 3 zeigt eine Aufsicht auf einen Teilabschnitt einer Kontakteinrichtung 1. In Fig. 4 ist ein Querschnitt entlang der Linie A-A aus Figur 3 dargestellt. Der Spulenleiter 31 und der Anschlussleiter 41 berühren sich an einer gemeinsamen Kontaktfläche 7. An dieser Kontaktfläche 7 kann eine Fügeverbindung stattfinden. Das Ende des Spulenleiters 31 tritt durch eine Durchführöffnung 5 im Kontaktträger 4 hindurch. Die Durchführöffnung 5 hat am eingangsseitigen Ende 9 eine größere Öffnungsweite als am ausgangsseitigen Ende 8 und verjüngt sich somit konisch in Einschubrichtung des Spulenleiters 31. Durch eine konische Form der Durchtrittsöffnung 5 lässt sich das Leiterende eines Spulenleiters 31 leichter durch die Durchführöffnung 5 einführen, wobei das Leiterende beim Einbringen durch den sich verjüngenden konischen Verlauf zum ausgangsseitigen Ende 8 in die Fixiereinrichtung 6 geführt wird. Die Fixiereinrichtung 6 ist mit ihren Haltenasen 61 direkt am ausgangsseitigen Ende 8 angeordnet. Auf diese Weise wird das Leiterende des jeweiligen Spulenleiters 31 durch die Fixiereinrichtung 6 bis zur Positionierung am Anschlussleiter 41 gezielt hindurchgeführt.

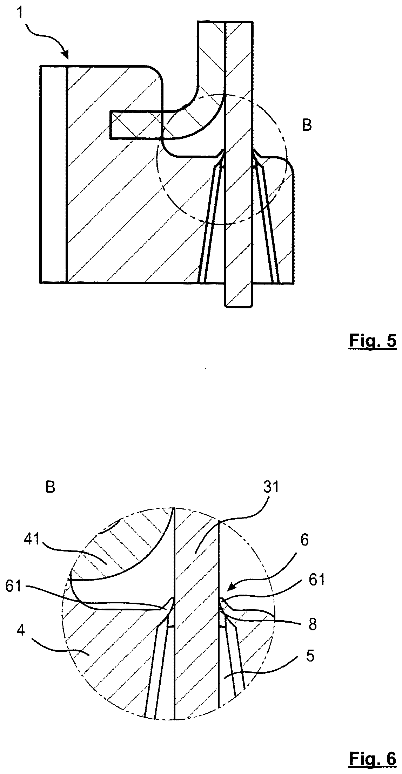

Fig. 5 zeigt einen Querschnitt auf einen Teilabschnitt einer Kontakteinrichtung 1. In Fig. 6 ist eine Detailansicht der Fixiereinrichtung 6 aus Figur 5 dargestellt. Die am ausgangsseitigen Ende 8 angeordneten Haltenasen 61 der Fixiereinrichtung 6 werden durch den hindurchgeschobenen Spulenleiter 31 in Einschubrichtung elastisch verformt und in Vorspannung versetzt. Diese nach oben gebogenen Haltenasen 61 wirken einem Zurückbewegen des jeweiligen Leiterendes des Spulenleiters 31 entgegen. Das elastische Verhalten der Engstelle bewirkt das Fixieren, bereits bevor der zugehörige Anschlussleiter 41 mit dem Spulenleiter 31 stoffschlüssig durch eine Schweiß- oder Lötverbindung verbunden wird.

### Bezugszeichenliste

- 1: Kontakteinrichtung
- 2: Stator
- 3: Spule
- 31: Spulenleiter
- 4: Kontaktträger
- 41: Anschlussleiter
- 5: Durchführöffnung
- 6: Fixiereinrichtung
- 61: Haltenase
- 7: Kontaktfläche
- 8: ausgangsseitiges Ende
- 9: eingangsseitiges Ende

## Patentansprüche

1. Kontakteinrichtung (1) für einen Stator (2) einer elektrischen Maschine, wobei die Kontakteinrichtung (1) einen Kontaktträger (4) aus elektrisch isolierendem Material, eine Oberseite, die vom Stator (2) abgewandt positionierbar ist, sowie zumindest auf der vom Stator (2) abgewandt positionierbaren Oberseite elektrisch leitende Anschlussleiter (41) zur Kontaktierung einer Mehrzahl von über dem Umfang des Stators (2) angeordneten Spulen (3) über Spulenleiter (31) aufweist,
wobei die Kontakteinrichtung (1) ferner Durchführöffnungen (5) aufweist, durch die die Spulenleiter (31) der Spulen (3) so durchführbar sind, dass mindestens ein Spulenleiter (31) mit einem Anschlussleiter (41) verbindbar ist,
wobei der Kontaktträger (4) an und/oder in den Durchführöffnungen (5) Fixiereinrichtungen (6) aufweist, die derart ausgebildet sind, dass mindestens ein durch eine Durchführöffnung (5) durchgeführter Spulenleiter (31) einen Anschlussleiter (41) an einer Kontaktfläche (7) berührt und der Spulenleiter (31) an dieser Kontaktfläche (7) durch senkrecht zur jeweiligen Leiterachse wirkende Kräfte eine permanente Kraftwirkung auf den Anschlussleiter (41) ausübt, wodurch zueinander parallel liegende Abschnitte des Spulenleiters (31) und des Anschlussleiters (41) an der gemeinsamen Kontaktfläche (7) aneinander gepresst werden,
**dadurch gekennzeichnet, dass** die Fixiereinrichtungen (6) durch elastischen Haltenasen (61) ausgebildet sind.

2. Kontakteinrichtung (1) nach Anspruch 1, **dadurch gekennzeichnet, dass** die Fixiereinrichtungen (6) derart ausgebildet sind, dass diese die Spulenleiter (31) zumindest in einer Richtung gegenüber einer axialen Bewegung arretieren.

3. Kontakteinrichtung (1) nach Anspruch 1 oder 2, **dadurch gekennzeichnet, dass** in mindestens einer Durchführöffnung (5) mehrere Haltenasen (61) angeordnet sind.

4. Kontakteinrichtung (1) nach einem der Ansprüche 1 bis 3, **dadurch gekennzeichnet, dass** die Haltenasen (61) eine formschlüssige Verbindung mit dem Spulenleiter (31) ausbilden.

5. Kontakteinrichtung (1) nach einem der Ansprüche 1 bis 4, **dadurch gekennzeichnet, dass** die Haltenasen (61) eine stoffschlüssige Verbindung mit dem Spulenleiter (31) ausbilden.

6. Kontakteinrichtung (1) nach einem der Ansprüche 1 bis 5, **dadurch gekennzeichnet, dass** die Fixiereinrichtung (6) in Einschubrichtung der Spulenleiter (31) am ausgangsseitigen Ende (8) der Durchführöffnung (5) angeordnet ist.

7. Kontakteinrichtung (1) nach einem der Ansprüche 1 bis 6, **dadurch gekennzeichnet, dass** sich die Durchführöffnungen (5) in Einschubrichtung der Spulenleiter (31) konisch verjüngen.

8. Stator (2) einer elektrischen Maschine mit einer Kontakteinrichtung (1) nach einem der Ansprüche 1 bis 7.

9. Elektrische Maschine mit einem Stator (2) nach Anspruch 8.

## Claims

1. Contact device (1) for a stator (2) of an electric machine, wherein the contact device (1) has a contact carrier (4) made of electrically insulating material, an upper side which can be positioned facing away from the stator (2), and at least at the upper side which can be positioned facing away from the stator (2) electrically conductive connection conductors (41) for contacting a plurality of coils (3) which are arranged over the circumference of the stator (2) by means of coil conductors (31),
wherein the contact device (1) further has feed-through openings (5) through which the coil conductors (31) of the coils (3) can be guided in such a manner that at least one coil conductor (31) can be connected to a connection conductor (41),
wherein the contact carrier (4) has on and/or in the feed-through openings (5) fixing devices (6) which are constructed in such a manner that at least one coil conductor (31) which is guided through a feed-through opening (5) touches a connection conductor (41) at a contact face (7) and the coil conductor (31) on this contact face (7) by means of forces acting perpendicularly to the respective conductor axis applies a permanent force action to the connection conductor (41), whereby mutually parallel portions of the coil conductor (31) and the connection conductor (41) are pressed against each other at the common contact face (7),
**characterised in that** the fixing devices (6) are formed by resilient retention projections (61).

2. Contact device (1) according to claim 1, **characterised in that** the fixing devices (6) are constructed in such a manner that they lock the coil conductors (31) at least in one direction with respect to an axial movement.

3. Contact device (1) according to claim 1 or 2, **characterised in that** a plurality of retention projections (61) are arranged in at least one feed-through opening (5).

4. Contact device (1) according to any one of claims 1 to 3, **characterised in that** the retention projections (61) form a positive-locking connection to the coil conductor (31).

5. Contact device (1) according to any one of claims 1 to 4, **characterised in that** the retention projections (61) form a materially engaging connection to the coil conductor (31).

6. Contact device (1) according to any one of claims 1 to 5, **characterised in that** the fixing device (6) is arranged in the insertion direction of the coil conductors (31) at the outlet-side end (8) of the feed-through opening (5).

7. Contact device (1) according to any one of claims 1 to 6, **characterised in that** the feed-through openings (5) taper conically in the insertion direction of the coil conductors (31) .

8. Stator (2) of an electric machine having a contact device (1) according to any one of claims 1 to 7.

9. Electric machine having a stator (2) according to claim 8.

## Revendications

1. Dispositif de contact (1) pour un stator (2) d'une machine électrique, où le dispositif de contact (1) présente un support de contacts (4) en matériau électriquement isolant, un côté supérieur, qui peut être positionné à l'opposé du stator (2), ainsi que des conducteurs de connexion électriquement conducteurs (41) au moins sur le côté supérieur qui peut être positionné à l'opposé du stator (2) pour la mise en contact avec une pluralité de bobines (3) disposées sur la circonférence du stator (2) par l'intermédiaire de conducteurs de bobine (31), où le dispositif de contact (1) présente en outre des ouvertures de passage (5) à travers lesquelles peuvent passer les conducteurs de bobine (31) des bobines (3) de telle manière qu'au moins un conducteur de bobine (31) peut être relié à un conducteur de connexion (41), où le support de contacts (4) présente sur et/ou dans les ouvertures de passage (5) des dispositifs de fixation (6) qui sont conçus de telle sorte qu'au moins un conducteur de bobine (31) amené à passer à travers une ouverture de passage (5) touche un conducteur de connexion (41) au niveau d'une surface de contact (7) et le conducteur de bobine (31) exerce au niveau de cette surface de contact (7) une action de force permanente sur le conducteur de connexion (41) par des forces agissant perpendiculairement à l'axe de conducteur respectif, de sorte que des sections du conducteur de bobine (31) et du conducteur de connexion (41) situées parallèlement entre elles sont pressées l'une contre l'autre au niveau de la surface de contact commune (7), **caractérisé en ce que** les dispositifs de fixation (6) sont formés par des pattes de retenue élastiques (61).

2. Dispositif de contact (1) selon la revendication 1, **caractérisé en ce que** les dispositifs de fixation (6) sont conçus de telle sorte qu'ils bloquent les conducteurs de bobine (31) au moins dans une direction contre un mouvement axial.

3. Dispositif de contact (1) selon la revendication 1 ou 2, **caractérisé en ce que** plusieurs pattes de retenue (61) sont disposées dans au moins une ouverture de passage (5).

4. Dispositif de contact (1) selon l'une des revendications 1 à 3, **caractérisé en ce que** les pattes de retenue (61) forment une liaison par assemblage de forme avec le conducteur de bobine (31).

5. Dispositif de contact (1) selon l'une des revendications 1 à 4, **caractérisé en ce que** les pattes de retenue (61) forment une liaison par assemblage de matière avec le conducteur de bobine (31).

6. Dispositif de contact (1) selon l'une des revendications 1 à 5, **caractérisé en ce que** le dispositif de fixation (6) est disposé dans le sens d'insertion des conducteurs de bobine (31) au niveau de l'extrémité côté sortie (8) de l'ouverture de passage (5).

7. Dispositif de contact (1) selon l'une des revendications 1 à 6, **caractérisé en ce que** les ouvertures de passage (5) se rétrécissent de manière conique dans le sens d'insertion des conducteurs de bobine (31).

8. Stator (2) d'une machine électrique avec un dispositif de contact (1) selon l'une des revendications 1 à 7.

9. Machine électrique avec un stator (2) selon la revendication 8.
